# FASCICULE DE BREVET EUROPEEN

(11) **EP 2 691 001 B1**
(45) Date de publication et mention de la délivrance du brevet: **06.01.2016**
(21) Numéro de dépôt: 12714773.4
(22) Date de dépôt: 14.03.2012
(51) Int. Cl.: A47K 11/02

(54) **INSTALLATION COMPACTE DE TOILETTES SECHES**
KOMPAKTE TROCKENTOILETTENANLAGE
COMPACT DRY TOILET INSTALLATION

(30) Priorité: 31.03.2011 FR 1152679
(43) Date de publication de la demande: 05.02.2014
(73) Titulaire: Sanisphère, 26110 Saint-Ferréol-Trente-Pas (FR)
(72) Inventeur: COLOMBOT, Pierre, F-26110 Saint-Ferreol Trente Pas (FR)
(74) Mandataire: Thibault, Jean-Marc
(86) Numéro de dépôt international: PCT/FR2012/050529
(87) Numéro de publication internationale: WO 2012/131210

(56) Documents cités:
- WO-A1-2006/004333
- FR-A1- 2 442 308
- FR-A1- 2 755 362
- JP-A- 2007 111 146
- US-A1- 2002 144 339
- US-A1- 2007 199 140

## Description

La présente invention concerne le domaine technique général des dispositifs d'assainissement, d'évacuation et de transformation des matières fécales et des urines humaines.

L'objet de l'invention vise plus particulièrement la catégorie des toilettes sèches assurant la séparation des urines et des déchets solides en vue du traitement de ces derniers par séchage ou compostage.

L'état de la technique a proposé de nombreuses solutions d'installations de toilettes sèches en particulier à compostage. Par exemple, le brevet FR 2 442 308 décrit un dispositif comprenant un siège de toilettes pourvu d'une ouverture d'évacuation gravitaire traversant le plancher pour déboucher sur un moyen de collecte des effluents liquides et des déchets solides tels que des matières fécales et des papiers toilettes. Le moyen de collecte est constitué par une bande inclinée sans fin faisant partie d'un tapis roulant assurant une séparation gravitaire des effluents liquides et des déchets solides. Ce tapis roulant est monté dans un local situé à un niveau inférieur par rapport à la pièce dans laquelle est installé le siège de toilettes. Ce local est aménagé pour comporter une série de bacs superposés de récupération des effluents liquides s'écoulant à la partie basse du tapis roulant. Ce tapis roulant est commandé en déplacement pour assurer le transfert des déchets solides vers un poste de traitement aménagé dans un local attenant.

Indépendamment de l'efficacité de cette installation, l'inconvénient principal de cette installation concerne son encombrement compte tenu des divers moyens techniques nécessaires pour le traitement des urines et des déchets solides. Il s'avère en pratique difficile voire impossible d'installer de telles toilettes sèches dans des logements collectifs et en particulier dans des appartements d'immeuble. Par ailleurs, de telles toilettes sèches ne présentent pas une sécurité absolue notamment vis-à-vis des jeunes enfants, ce qui interdit leur installation dans un logement familial.

De même, le document WO 2006/004333 décrit une installation de toilettes sèches présentant les caractéristiques du préambule de la revendication 1. Cette installation est aménagée à l'intérieur d'un bâtiment pourvu d'un local aménagé en-dessous du siège des toilettes pour comporter les moyens techniques de traitement des urines et des matières fécales. Une telle installation présente un encombrement important nécessitant un aménagement selon deux niveaux superposés. Par ailleurs, une telle installation ne présente pas une sécurité absolue notamment vis-à-vis des jeunes enfants.

La présente invention vise à remédier aux inconvénients de l'état de la technique en proposant une nouvelle installation de toilettes sèches présentant un encombrement limité n'imposant pas en particulier de réaliser un local en-dessous des toilettes tout en offrant une totale sécurité pour l'ensemble des utilisateurs et en particulier les jeunes enfants.

Pour atteindre un tel objectif, l'installation de toilettes sèches conforme à l'invention comporte :
- un siège de toilettes se présentant sous la forme d'un corps creux possédant à l'opposé d'une face inférieure d'appui sur le sol, une face supérieure dans laquelle est aménagée une ouverture d'évacuation gravitaire pour les effluents liquides et les déchets solides,
- un tapis roulant monté de manière inclinée en délimitant entre une partie basse et une partie haute, une surface de réception des effluents liquides et des déchets solides, pour assurer une séparation gravitaire des effluents liquides et des déchets solides,
- un dispositif de récupération des effluents liquides provenant du tapis roulant,
- un système de déplacement assurant l'avancée du tapis roulant et par suite l'amenée des déchets solides, d'une zone de réception située à l'aplomb de l'ouverture d'évacuation vers une zone de stockage
- une partie du tapis roulant, à partir de sa partie basse, est montée à l'intérieur du siège de toilettes de manière qu'à l'aplomb de l'ouverture d'évacuation, la distance entre le tapis roulant et ladite ouverture soit comprise entre 15 et 35 cm, le tapis roulant s'étendant en saillie à partir de la face arrière du siège selon un guichet de passage présenté par ladite face arrière du siège,
- l'ouverture d'évacuation gravitaire est bordée par un conduit de descente s'étendant jusqu'à la surface de réception, en étant positionné de manière que son extrémité libre ne soit pas parallèle à la surface de réception, la partie antérieure de l'extrémité libre du conduit de descente étant montée pour affleurer la surface de réception afin de servir de butée d'arrêt pour les déchets solides, la partie postérieure de l'extrémité libre du conduit de descente étant écartée de la surface de réception pour laisser passer les déchets solides, les parties antérieure et postérieure de l'extrémité libre étant prises en considération des faces avant et arrière du siège,
- le dispositif de récupération des effluents liquides comporte un bac de réception monté à l'intérieur du siège des toilettes à l'aplomb de la partie basse du tapis roulant.

L'objet de l'invention vise également une installation comportant en combinaison l'une et/ou l'autre des caractéristiques additionnelles suivantes :
- l'ouverture d'évacuation gravitaire est aménagée dans la face supérieure du siège dont la face avant est de forme arrondie,
- l'ouverture d'évacuation gravitaire présente une section de passage dont au moins une partie de la projection s'étend en dehors du tapis roulant et en ce que le conduit de descente comporte une extrémité inférieure délimitant une ouverture dont la projection s'étend à l'intérieur du tapis roulant, l'extrémité inférieure du conduit de collecte étant reliée par une paroi de raccordement évasée, à l'extrémité supérieure du conduit de collecte bordant l'ouverture d'évacuation,
- le siège de toilettes se présente sous la forme d'un coffre de forme sensiblement parallélépipédique,
- le conduit de descente comporte une surface interne de couleur sombre et d'aspect moucheté,
- l'ouverture d'évacuation gravitaire présente une section de passage oblongue de sorte que la projection se trouve située à l'intérieur du tapis roulant,
- le bac de réception des effluents liquides comporte une partie siphoïde,
- le bac de réception présente une surface d'écoulement jusqu'à une ouverture d'évacuation, le bac de réception étant équipé d'un système de raclage de la surface d'écoulement ou de projection d'un liquide de nettoyage sur la surface d'écoulement, pour éliminer les dépôts solides susceptibles d'intervenir sur ladite surface d'écoulement,
- la zone de stockage comporte un milieu de compostage constitué notamment des déchets solides amenés par le tapis roulant et de lombrics d'une variété adaptée à la transformation des déchets en compost, et éventuellement d'un système d'humidification destiné à maintenir humide le milieu de compostage, autrement que par un apport d'urine,
- un dispositif de déplacement des déchets solides accumulés dans la zone de stockage au droit de la partie haute du tapis roulant,
- le fonctionnement du dispositif de déplacement des déchets est synchronisé au déplacement du tapis roulant,
- un dispositif de récupération des déchets solides amenés dans la zone de stockage, comportant une noria de bacs déplaçables verticalement et amenés à stationner temporairement lors de leur déplacement, dans la zone de stockage, ce déplacement de la noria de bacs étant synchronisé au déplacement du tapis roulant.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective par derrière montrant un premier exemple de réalisation d'une installation compacte de toilettes sèches conforme à l'invention.
La **Figure 2** est une vue en coupe élévation d'une installation de toilettes sèches telle qu'illustrée à la **Fig. 1****.**
La **Figure 3** est une vue de dessus du siège de toilettes illustré aux figures 1 et 2.
La **Figure 3A** est une vue de dessus d'une variante de réalisation du siège de toilettes conforme à l'invention.
La **Figure 4** est une vue de dessus d'une autre variante de réalisation d'un siège de toilettes conforme à l'invention.
La **Figure 5** est une vue en perspective d'un exemple de réalisation d'un conduit de descente équipant une installation de toilettes conforme à l'invention.
Les **Figures 6** et **7** sont des vues en élévation montrant un exemple de réalisation d'un dispositif pour déplacer les déchets solides.
Les **Figures 8** et **9** sont des vues en perspective respectivement en face avant et face arrière d'un exemple de réalisation d'un dispositif de récupération des déchets solides.
La **Figure 10** est une vue en perspective d'une variante de réalisation dans laquelle le bac de récupération des effluents liquides est pourvu d'un système de raclage.

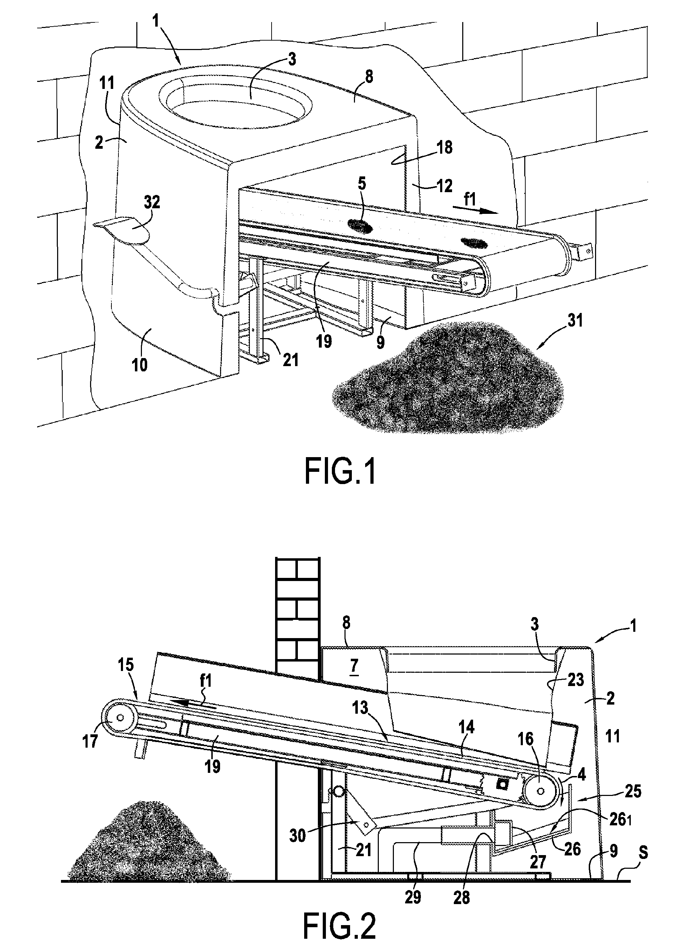

Tel que cela ressort plus précisément des **Fig. 1** et **2****,** l'objet de l'invention concerne une installation compacte de toilettes sèches **1** comportant un siège de toilettes **2** délimitant une ouverture d'évacuation gravitaire **3** pour des effluents liquides **4** tels que des urines et des déchets solides **5** tels que des matières fécales, du papier toilette ou des serviettes hygiéniques.

Le siège des toilettes **2** se présente sous la forme d'un corps creux délimitant un volume interne **7.** Ce siège **2** présente une face supérieure **8** dans laquelle est aménagée l'ouverture d'évacuation **3** s'étendant parallèlement à une face inférieure d'appui **9** sur le sol **S.**

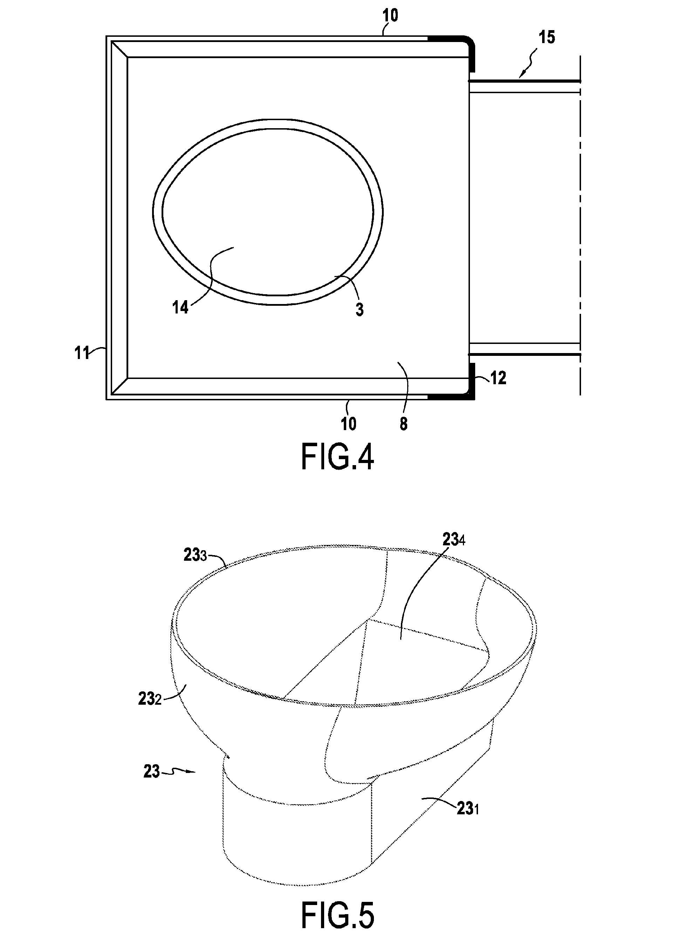

Les faces supérieure **8** et inférieure **9** sont reliées entre elles par des parois de côté **10,** une face avant **11** et une face arrière **12.** Dans l'exemple illustré aux **Fig. 1** à **3****,** la face avant **11** est arrondie tandis que dans l'exemple illustré à la **Fig. 4****,** la face avant **11** est plane. De préférence, la face inférieure d'appui **9** se limite à une bordure périphérique se prolongeant à l'équerre, à partir des parois de côté **10** et la face avant **11.**

Avantageusement, le siège **2** possède entre sa face supérieure **8** et sa face inférieure d'appui **9,** une hauteur comprise entre 45 et 50 cm.

L'ouverture d'évacuation gravitaire **3** est placée à l'aplomb d'un système de collecte **13** des déchets solides **5** et des effluents liquides **4,** assurant la séparation gravitaire entre les déchets solides **5** et les effluents liquides **4.** Dans l'exemple illustré, le système de collecte et de séparation **13** comporte une surface inclinée **14** sur laquelle débouche l'ouverture d'évacuation gravitaire **3** de manière à recueillir les déchets solides **5** et les effluents liquides **4.** La surface inclinée **14** de réception des effluents liquides **4** et des déchets solides **5,** est adaptée pour assurer une séparation gravitaire complète entre d'une part, les effluents liquides **4** et d'autre part, les déchets solides **5.** La surface de réception **14** est inclinée d'un angle compris entre une valeur de quelques degrés à quelques dizaines de degrés et de préférence compris entre 5 et 30°. La surface de réception inclinée **14** fait partie d'un tapis roulant **15** formé à partir d'une bande sans fin présentant une partie inférieure et une partie supérieure qui forme la surface de réception **14.** Cette bande sans fin est montée entre un premier rouleau **16** dit inférieur monté à l'intérieur du siège **2,** et d'un deuxième rouleau **17** dit supérieur s'étendant à l'extérieur du siège **2** en traversant la face arrière **12** par une ouverture ou un guichet de passage **18** aménagée dans la face arrière **12.** Les deux rouleaux **16, 17** sont montés sur des longerons de support **19** s'étendant entre les parties inférieure et supérieure du tapis de roulant **15.**

Le tapis roulant **15** est supporté par une structure porteuse **21** prenant appui sur le sol **S** et montée à l'intérieur du siège **2.** La structure porteuse **21** est fixée aux longerons de support **19** du tapis roulant **15** qui s'étend ainsi en porte-à-faux par rapport au siège **2** et en particulier par rapport à la face arrière **12.** Ainsi, une partie du tapis roulant **15,** à partir de sa partie basse délimitée par le premier rouleau **16,** est montée à l'intérieur du siège **2** tandis que la partie haute du tapis roulant délimitée à partir du deuxième rouleau **17,** s'étend à l'extérieur du siège **2** en traversant la face arrière **12** du siège **2.** Dans l'exemple illustré sur les dessins, plus de la moitié de la longueur du tapis roulant **15** est montée à l'intérieur du siège **2.**

Selon une caractéristique de l'invention, le tapis roulant **15** est monté de manière que la surface de réception **14** située à l'aplomb de l'ouverture de l'évacuation **3,** se trouve à une distance de cette ouverture d'évacuation **3** comprise entre 15 et 35 cm et par exemple de l'ordre de 30 cm. Ainsi, la hauteur entre l'ouverture d'évacuation **3** et la surface de réception **14** est relativement limitée évitant la chute accidentelle d'un enfant par exemple.

Selon une autre caractéristique de l'invention, l'ouverture d'évacuation gravitaire **3** se prolonge jusqu'au niveau de la surface de réception **14** par l'intermédiaire d'un conduit de descente **23.** Tel que cela ressort plus précisément de la figure 2, le conduit de descente **23** s'étend à partir de l'ouverture d'évacuation **3** jusqu'à la surface de réception **14,** en étant positionné de manière que son extrémité libre **23₁** ne soit pas parallèle à la surface de réception **14.** Ainsi, la partie antérieure de l'extrémité libre **23₁** du conduit de descente est montée pour affleurer la surface de réception **14** afin de servir de butée d'arrêt pour les déchets solides **5.** La partie postérieure de l'extrémité libre **23₁** du conduit de descente **23** est écartée de la surface de réception **14** pour laisser passer les déchets solides **5.** Les parties antérieure et postérieure de l'extrémité libre **23₁** sont prises en considération des faces avant et arrière **12** du siège **2.** Selon une variante avantageuse de réalisation, le conduit de descente **23** comporte une surface interne de couleur sombre et d'aspect moucheté.

L'installation **1** comporte également un dispositif **25** de récupération des effluents liquides s'écoulant à partir de la partie inférieure du tapis roulant **15.** Le dispositif de récupération **25** des effluents liquides **4** comporte un bac de réception **26** monté à l'aplomb de la partie basse du tapis roulant **15** en étant monté à l'intérieur du siège **2** des toilettes. Par exemple, le bac **26** est monté sur la structure porteuse **21** pour être positionné dans une position stable. Eventuellement, le bac **26** possède une partie syphoïde **27** pour éviter la remontée des odeurs. Cette partie syphoïde communique avec une ouverture d'évacuation **28** équipée d'un raccord **29** à une conduite d'évacuation. Ainsi, le bac **26** présente une surface d'écoulement **26₁** aménagée de manière à conduire les effluents liquides vers l'ouverture d'évacuation **28.**

Selon une autre caractéristique de l'invention, l'installation de toilettes **1** comporte un système de déplacement **30** assurant l'avancée du tapis roulant **15** et par suite l'amenée des déchets solides **5,** d'une zone de réception située à l'aplomb de l'ouverture d'évacuation **3** vers une zone **31** de stockage et/ou de traitement. Ce système de déplacement **30** assure le déplacement de la surface de réception **14** dans un sens représenté par la flèche **F1** sur les **fig. 1** et **2****,** dirigé vers la partie supérieure ou le sommet du tapis roulant **15.** Le système de déplacement **30** comporte un mécanisme de commande **32** tel que par exemple, une pédale actionnée après chaque utilisation des toilettes. L'actionnement de la pédale conduit au déplacement du tapis roulant à la suite de la rotation de l'un des rouleaux **16, 17.** La rotation de l'un des rouleaux **16, 17** est assurée par un groupe motorisé ou de préférence par un système mécanique à base de pignons et de biellettes, actionné par la pédale **32.**

Selon une variante préférée de réalisation, le système de déplacement **30** est adapté pour permettre de déplacer, à tous les 3 à 20 actionnements de la pédale **32,** le tapis roulant **15** selon une distance suffisante pour placer les déchets solides **5** déposés à l'aplomb de l'ouverture d'évacuation **3,** en dehors de l'aplomb de cette ouverture d'évacuation gravitaire **3** pour éviter une humidification des déchets solides **5** recueillis dans la zone **31.** Ainsi, les déchets solides **5** sont amenés à la partie supérieure du tapis roulant **15** après quelques dizaines ou centaines d'utilisations. Le tapis roulant **15** assure ainsi le transport des déchets solides **5** jusqu'à l'extrémité supérieure, ou haute du tapis roulant **15,** de sorte que les déchets solides **5** sont déversés de manière gravitaire vers la zone de stockage et/ou de traitement **31.**

Selon une variante préférée de réalisation, les matières solides **5** viennent alimenter dans la zone **31,** un milieu de compostage comportant en particulier des lombrics d'une variété adaptée à la transformation des matières fécales et autres déchets en compost.

Il ressort de la description qui précède que l'installation de toilettes sèches **1** est compacte puisqu'elle n'impose pas d'aménager un local en dessous du siège des toilettes. L'installation de toilettes **1** selon l'invention peut être installée sur un seul niveau d'un logement ou d'une habitation puisque l'ensemble des équipements est positionné à l'intérieur du siège **2** à l'exception d'une partie du tapis roulant **15** qui dépasse de la face arrière **12** pour venir s'établir dans un local attenant ou à l'extérieur de l'habitation. Par ailleurs, une telle installation de toilettes **1** supprime les risques de blessures en cas de chute de très jeunes enfants, à une hauteur de chute maximum de 35 cm.

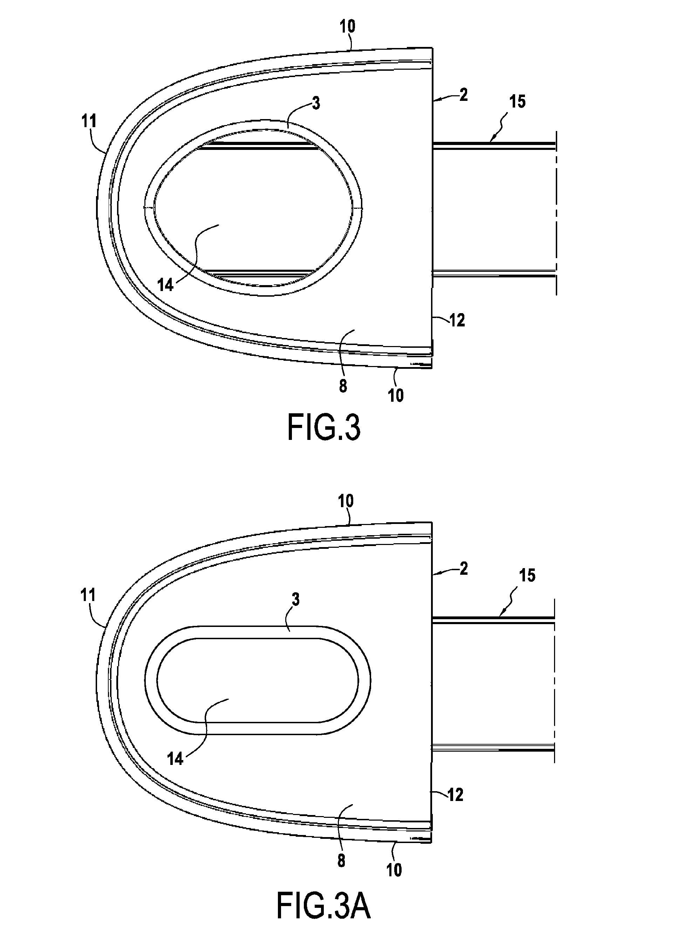

Dans l'exemple illustré à la fig. 4, le siège **2** possède une face avant **11** plane facilitant la mise en place d'un tapis roulant **15** large c'est-à-dire présentant une surface voisine ou plus grande que la projection de l'ouverture d'évacuation **3.** Selon cette variante de réalisation, le siège **2** est réalisé sous la forme d'un coffre de forme parrallépipédique. Si cette variante de réalisation illustrée à la **fig. 4** permet de réaliser le conduit de descente **23** sous la forme d'un conduit tubulaire cylindrique, le siège **2** de forme parallélépipédique ne permet pas le positionnement des pieds des utilisateurs de part et d'autre du siège **2.** La réalisation de la face avant **11** du siège selon une forme arrondie (fig. 1 à 3) autorise l'utilisateur à positionner les pieds de part et d'autre du siège **2.** Dans ce cas, la largeur du siège **2** est réduite conduisant à une réduction de la largeur du tapis roulant **15.** Selon cette variante de réalisation, au moins une partie de la projection de l'ouverture d'évacuation **3** s'étend en dehors du tapis roulant **15** comme cela apparait clairement à la fig. 3. Pour assurer l'acheminement des déchets solides **5** et des effluents liquides **4** jusqu'au tapis roulant **15,** le conduit de descente **23,** comme illustré à la **fig. 5****,** comporte une extrémité inférieure **23₁** délimitant une ouverture dont la projection s'étend à l'intérieur du tapis roulant **15.** L'extrémité inférieure **23₁** est reliée par une paroi de raccordement évasée **23₂** délimitant une section de passage **23₃** au moins égale à celle de l'ouverture d'évacuation **3.** L'extrémité inférieure **23₁** comporte dans sa partie arrière, une ouverture **23₄** de passage pour les déchets solides **5.** L'ouverture d'évacuation **3** se trouve bordée par la paroi de raccordement évasée **23₂** prolongée vers le bas par l'extrémité inférieure **23₁**, assurant l'acheminement des déchets solides **5** et des effluents liquides **4** jusqu'à la surface de réception **14.**

Dans l'exemple illustré aux **fig. 1** à **3****,** l'ouverture d'évacuation **3** présente une forme elliptique. La **fig. 3A** illustre un autre exemple de réalisation dans lequel l'ouverture d'évacuation gravitaire **3** présente une section de passage oblongue de sorte que sa projection se trouve située à l'intérieur d'un tapis roulant **15** de largeur réduite ne nécessitant pas un conduit de descente **23** de forme évasée comme décrit à la **fig. 5****.**

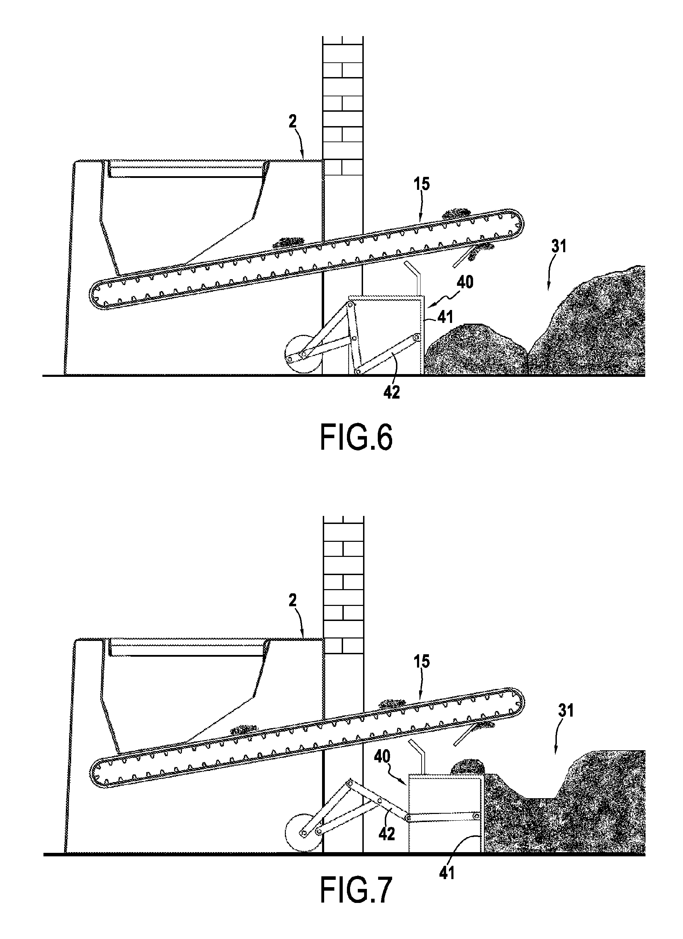

Selon une variante de réalisation, l'installation de toilettes **1** comporte comme illustré aux **fig. 6** et **7****,** un dispositif **40** de déplacement des déchets solides **5** accumulés dans la zone de stockage **31** au droit de la partie haute du tapis roulant **15.** Selon une caractéristique avantageuse de réalisation, le fonctionnement du dispositif de déplacement **40** est synchronisé au déplacement du tapis roulant **15.** Un tel système de déplacement **40** peut-être de tous types connus en soi. Par exemple, un tel système de déplacement **40** est du type mécanique et comporte une lame de poussée **41** déplacée par un système **42** du type compas relié par une liaison mécanique au tapis roulant **15.**

Le déplacement aller et retour du dispositif **40** permet d'assurer le stockage des déchets solides en dehors de la zone **31** de retombée des déchets solides **5.**

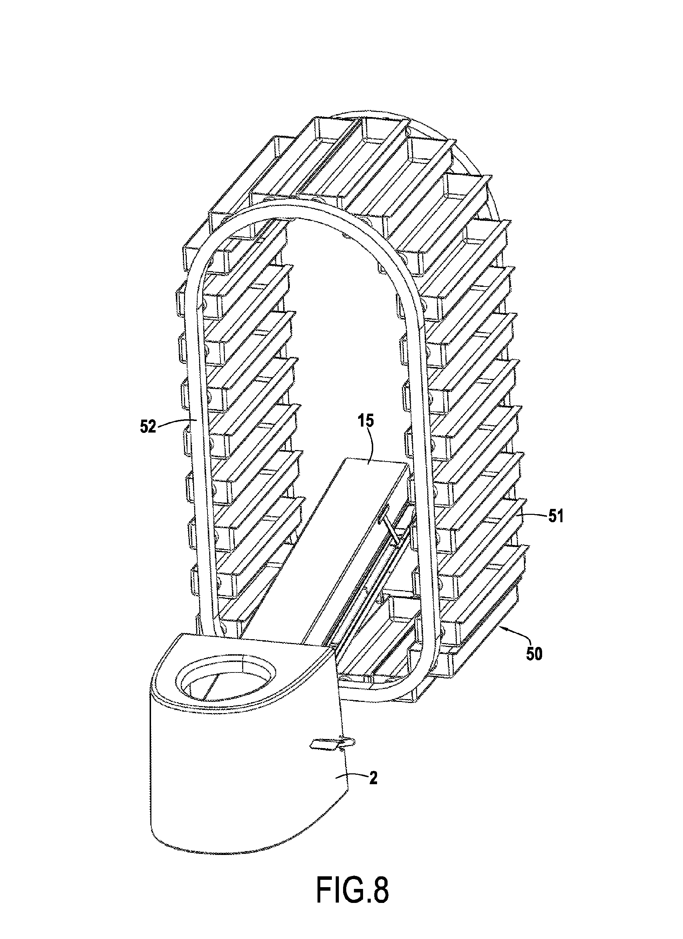

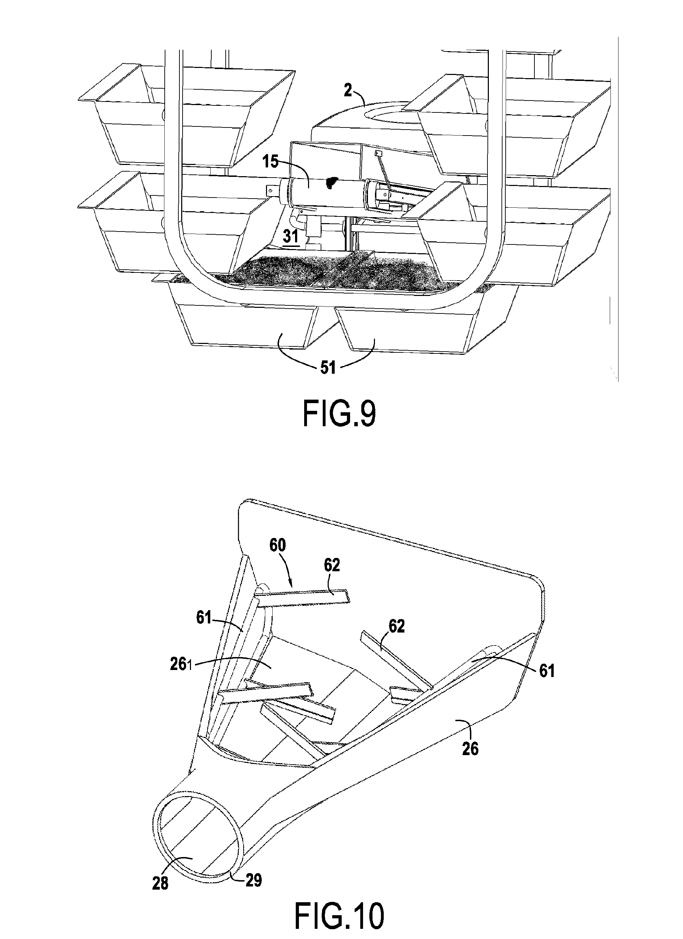

Les **Fig. 8** et **9** illustrent une autre variante de réalisation dans laquelle l'installation de toilettes **1** comporte un dispositif **50** de récupération des déchets solides **5** amenés dans la zone de stockage **31.** Dans l'exemple illustré, le dispositif de récupération **50** comporte une noria de bacs **51** monté pour se déplacer sur un bâti porteur **52** formant un chemin de guidage vertical en boucle fermée en forme de « O ». Au cours de leur trajet, les bacs **51** sont amenés à défiler successivement dans la zone de stockage **31.** Tel que cela ressort à la figure 9, lorsque les bacs **51** sont situés à l'aplomb de la partie haute du tapis roulant **15,** les deux bacs **51** voisins sont accolés pour constituer une surface continue de réception des déchets solides **5.** Après le passage des bacs **51** dans la zone de stockage **30,** les bacs **51** sont déplacés verticalement vers le haut puis vers le bas pour revenir passer de nouveau dans la zone de stockage **30.** Au cours de leur trajet, chaque bac **51** est vidé à un poste de récupération soit manuellement soit de manière automatique. Ainsi, il peut être prévu de monter chaque bac **51** de manière basculante par rapport au bâti **52** en vue d'assurer leur vidage au passage d'une came de déplacement.

Bien entendu, le déplacement des bacs **51** est synchronisé au déplacement du tapis roulant **15.** Le déplacement des bacs **51** est assuré par tous moyens connus comme par exemple, une chaine guidée sur le bâti et sur laquelle les bacs **51** sont montés solidaires. Cette chaine est déplacée par l'intermédiaire d'une transmission reliée au tapis roulant **15.**

Selon une variante préférée de réalisation, le bac **26** de réception des effluents liquides comporte un système de raclage **60** de la surface d'écoulement **26₁** ou d'un système de projection d'un liquide de nettoyage sur la surface d'écoulement (**fig. 10**). Le nettoyage régulier de la surface d'écoulement **26₁** permet de la maintenir propre en évacuant les éventuels dépôts solides susceptibles d'apparaître. Ces dépôts solides correspondent en particulier à des déchets solides **5** amenés accidentellement dans le bac **26** et à de la struvite correspondant à un précipité pâteux qui se forme à partir des points de rétention des urines, formés par les déchets solides. Ce nettoyage évite la formation de ce précipité pâteux qui peut à terme, altérer voire empêcher l'écoulement des liquides et en particulier obturer l'ouverture d'évacuation **28** des liquides.

Dans l'exemple de réalisation illustré à la **fig. 10****,** le système de raclage **60** comporte deux chaînes d'entraînement **61** équipées de racles **62** venant en contact avec la surface d'écoulement **26₁** pour la nettoyer. Ces chaînes d'entraînement **61** sont entraînées en déplacement synchronisé avec le déplacement du tapis roulant **15,** à l'aide d'une liaison de transmission entre les chaînes d'entraînement **61** et le tapis roulant **15.**

L'invention n'est pas limitée aux exemples décrits et représentés car diverses modifications peuvent y être apportées sans sortir de son cadre.

## Revendications

1. Installation de toilettes sèches comportant :
- un siège de toilettes (**2)** se présentant sous la forme d'un corps creux possédant à l'opposé d'une face inférieure d'appui (**9**) sur le sol, une face supérieure (**8**) dans laquelle est aménagée une ouverture d'évacuation gravitaire (**3**) pour les effluents liquides (**4**) et les déchets solides (**5**),
- un tapis roulant (**15**) monté de manière inclinée en délimitant entre une partie basse et une partie haute, une surface de réception (**14**) des effluents liquides et des déchets solides, pour assurer une séparation gravitaire des effluents liquides et des déchets solides, une partie du tapis roulant (**15**), à partir de sa partie basse, étant montée à l'intérieur du siège (**2**) de toilettes tandis que le tapis roulant s'étend en saillie à partir de la face arrière du siège selon un guichet de passage (**18**) présenté par ladite face arrière du siège,
- un dispositif (**25**) de récupération des effluents liquides (**4**) provenant du tapis roulant (**15**) comportant un bac de réception (**26**),
- un système de déplacement (**30**) assurant l'avancée du tapis roulant (**15**) et par suite l'amenée des déchets solides, d'une zone de réception située à l'aplomb de l'ouverture d'évacuation vers une zone de stockage (**31**),
**caractérisée en ce que** :
- le tapis roulant (**15**) est monté de manière qu'à l'aplomb de l'ouverture d'évacuation (**3**), la distance entre le tapis roulant (**15**) et ladite ouverture (**3**) soit comprise entre 15 et 35 cm,
- l'ouverture d'évacuation gravitaire (**3**) est bordée par un conduit de descente (**23**) s'étendant jusqu'à la surface de réception (**14**), en étant positionné de manière que son extrémité libre (**23₁**) ne soit pas parallèle à la surface de réception (**14**), la partie antérieure de l'extrémité libre (**23₁**) du conduit de descente étant montée pour affleurer la surface de réception (**14**) afin de servir de butée d'arrêt pour les déchets solides (**5**), la partie postérieure de l'extrémité libre (**23₁**) du conduit de descente (**23**) étant écartée de la surface de réception (**14**) pour laisser passer les déchets solides (**5**), les parties antérieure et postérieure de l'extrémité libre (**23₁**) étant prises en considération des faces avant et arrière (**12**) du siège (**2**),
- le bac de réception (**26**) du dispositif de récupération (**25**) des effluents liquides (**4**) est monté à l'intérieur du siège (**2**) des toilettes à l'aplomb de la partie basse du tapis roulant (**15**).

2. Installation de toilettes selon la revendication 1, **caractérisée en ce que** l'ouverture d'évacuation gravitaire (**3**) est aménagée dans la face supérieure (**8**) du siège (**2**) dont la face avant (**11**) est de forme arrondie.

3. Installation de toilettes selon la revendication 2, **caractérisée en ce que** l'ouverture d'évacuation gravitaire (**3**) présente une section de passage dont au moins une partie de la projection s'étend en dehors du tapis roulant (**15**) et **en ce que** le conduit de descente (**23**) comporte une extrémité inférieure délimitant une ouverture dont la projection s'étend à l'intérieur du tapis roulant (**15**), l'extrémité inférieure (**23₁**) du conduit de collecte étant reliée par une paroi de raccordement évasée (**23₂**), à l'extrémité supérieure (**23₃**) du conduit de collecte bordant l'ouverture d'évacuation (**3**).

4. Installation de toilettes selon la revendication 1, **caractérisée en ce que** le siège (**2**) de toilettes se présente sous la forme d'un coffre de forme sensiblement parallélépipédique.

5. Installation de toilettes selon l'une des revendications 1 à 3, **caractérisée en ce que** l'ouverture d'évacuation gravitaire (**3**) présente une section de passage oblongue de sorte que la projection se trouve située à l'intérieur du tapis roulant (**15**).

6. Installation de toilettes selon l'une des revendications 1 à 5, **caractérisée en ce que** le conduit de descente (**23**) comporte une surface interne de couleur sombre et d'aspect moucheté.

7. Installation de toilettes selon l'une des revendications 1 à 6, **caractérisée en ce que** le bac de réception (**26**) des effluents liquides (**4**) comporte une partie siphoïde (**27**).

8. Installation de toilettes selon l'une des revendications 1 à 7, **caractérisée en ce que** le bac de réception (**26**) présente une surface d'écoulement (**26₁**) jusqu'à une ouverture d'évacuation (**28**), le bac de réception (**26**) étant équipé d'un système de raclage (**60**) de la surface d'écoulement ou de projection d'un liquide de nettoyage sur la surface d'écoulement, pour éliminer les dépôts solides susceptibles d'intervenir sur ladite surface d'écoulement.

9. Installation de toilettes selon l'une des revendications 1 à 8, **caractérisée en ce qu'**elle comporte dans la zone de stockage (**31**), un milieu de compostage constitué notamment des déchets solides (**5**) amenés par le tapis roulant (**15**) et de lombrics d'une variété adaptée à la transformation des déchets en compost, et éventuellement d'un système d'humidification destiné à maintenir humide le milieu de compostage, autrement que par un apport d'urine.

10. Installation de toilettes selon l'une des revendications 1 à 9, **caractérisée en ce qu'**elle comporte un dispositif de déplacement (**40**) des déchets solides accumulés dans la zone de stockage (**31**) au droit de la partie haute du tapis roulant.

11. Installation de toilettes selon la revendication 10, **caractérisée en ce que** le fonctionnement du dispositif de déplacement (**40**) des déchets est synchronisé au déplacement du tapis roulant (**15**).

12. Installation de toilettes selon l'une des revendications 1 à 11, **caractérisée en ce qu'**elle comporte un dispositif de récupération (**50**) des déchets solides amenés dans la zone de stockage, comportant une noria de bacs (**51**) déplaçables verticalement et amenés à stationner temporairement lors de leur déplacement, dans la zone de stockage (**31**), ce déplacement de la noria de bacs étant synchronisé au déplacement du tapis roulant (**15**).

## Patentansprüche

1. Trockentoilettenanlage, umfassend:
- einen Toilettensitz (2), der in Form eines Hohlkörpers vorliegt, welcher entgegengesetzt zu einer Unterseite zur Auflage (9) auf dem Boden eine Oberseite (8) besitzt, in der eine Schwerkraftabführöffnung (3) für die Flüssigabfälle (4) und die festen Abfälle (5) ausgebildet ist,
- ein Förderband (15), das, unter Begrenzen einer Fläche zur Aufnahme (14) der Flüssigabfälle und der festen Abfälle zwischen einem unteren Teil und einem oberen Teil, geneigt angebracht ist, um eine Schwerkrafttrennung der Flüssigabfälle und der festen Abfälle sicherzustellen, wobei ein Teil des Förderbands (15), ausgehend von seinem unteren Teil, innerhalb des Toilettensitzes (2) angebracht ist, während das Förderband sich ausgehend von der Rückseite des Sitzes, über ein Durchgangsfenster (18), das die Rückseite des Sitzes aufweist, vorspringend verläuft,
- eine Vorrichtung (25) zum Auffangen der von dem Förderband (15) kommenden Flüssigabfälle (4), welche einen Aufnahmebehälter (26) umfasst,
- ein Bewegungssystem (30), das das Vorwärtsbewegen des Förderbands (15) und demnach das Zuführen der festen Abfälle von einem genau unter der Abführöffnung gelegenen Aufnahmebereich zu einem Lagerungsbereich (31) sicherstellt,
**dadurch gekennzeichnet, dass**:
- das Förderband (15) derart angebracht ist, dass genau unter der Abführöffnung (3) der Abstand zwischen dem Förderband (15) und der Öffnung (3) zwischen 15 und 35 cm beträgt,
- die Schwerkraftabführöffnung (3) durch eine Fallleitung (23) eingefasst ist, die sich bis zu der Aufnahmefläche (14) erstreckt und dabei derart positioniert ist, dass ihr freies Ende (23₁) zu der Aufnahmefläche (14) nicht parallel verläuft, wobei der vordere Teil des freien Endes (23₁) der Fallleitung angebracht ist, um die Aufnahmefläche (14) leicht zu berühren, um für die festen Abfälle (5) als Anschlag zu dienen, wobei der hintere Teil des freien Endes (23₁) der Falileitung (23) von der Aufnahmefläche (14) beabstandet ist, um die festen Abfälle (5) passieren zu lassen, wobei der vordere und der hintere Teil des freien Endes (23₁) von der Vorder- und der Rückseite (12) des Sitzes (2) betrachtet werden,
- der Aufnahmebehälter (26) der Auffangvorrichtung (25) der Flüssigabfälle (4) innerhalb des Sitzes (2) der Toiletten genau unter dem unteren Teil des Förderbands (15) angebracht ist.

2. Toilettenanlage nach Anspruch 1, **dadurch gekennzeichnet, dass** die Schwerkraftabführöffnung (3) in der Oberseite (8) des Sitzes (2), dessen Vorderseite (11) eine abgerundete Form aufweist, ausgebildet ist.

3. Toilettenanlage nach Anspruch 2, **dadurch gekennzeichnet, dass** die Schwerkraftabführöffnung (3) einen Durchgangsquerschnitt aufweist, von dem wenigstens ein Teil der Projektion außerhalb des Förderbands (15) verläuft, und dass die Fallleitung (23) ein unteres Ende umfasst, das eine Öffnung begrenzt, deren Projektion innerhalb des Förderbands (15) verläuft, wobei das untere Ende (23₁) der Sammelleitung über eine aufgeweitete Verbindungswand (23₂) mit dem oberen Ende (23₃) der die Abführöffnung (3) einfassenden Sammelleitung verbunden ist.

4. Toilettenanlage nach Anspruch 1, **dadurch gekennzeichnet, dass** der Toilettensitz (2) in Form eines im Wesentlichen quaderförmigen Kastens vorliegt.

5. Toilettenanlage nach einem der Ansprüche 1 bis 3, **dadurch gekennzeichnet, dass** die Schwerkraftabführöffnung (3) einen länglichen Durchgangsquerschnitt aufweist, so dass die Projektion innerhalb des Förderbands (15) liegt.

6. Toilettenanlage nach einem der Ansprüche 1 bis 5, **dadurch gekennzeichnet, dass** die Fallleitung (23) eine Innenfläche von dunkler Farbe und mit gesprenkeltem Aussehen umfasst.

7. Toilettenanlage nach einem der Ansprüche 1 bis 6, **dadurch gekennzeichnet, dass** der Behälter zur Aufnahme (26) der Flüssigabfälle (4) einen Siphonteil (27) umfasst.

8. Toilettenanlage nach einem der Ansprüche 1 bis 7, **dadurch gekennzeichnet, dass** der Aufnahmebehälter (26) eine Ablauffläche (26₁) bis zu einer Abführöffnung (28) umfasst, wobei der Aufnahmebehälter (26) mit einem System zum Abstreifen (60) der Ablauffläche oder zum Spritzen einer Reinigungsflüssigkeit auf die Ablauffläche ausgestattet ist, um die festen Ablagerungen, die auf der Ablauffläche vorkommen können, zu entfernen.

9. Toilettenanlage nach einem der Ansprüche 1 bis 8, **dadurch gekennzeichnet, dass** sie in dem Lagerungsbereich (31) ein Kompostiermilieu umfasst, das insbesondere von den über das Förderband (15) zugeführten festen Abfällen (5) und von Regenwürmern einer Art, welche für die Umwandlung der Abfälle in Kompost geeignet ist, gebildet ist, sowie eventuell ein Befeuchtungssystem, das dazu bestimmt ist, das Kompostiermilieu, anders als durch eine Urinzufuhr, feucht zu halten.

10. Toilettenanlage nach einem der Ansprüche 1 bis 9, **dadurch gekennzeichnet, dass** sie eine Vorrichtung zum Bewegen (40) der in dem Lagerungsbereich (31) angesammelten festen Abfälle gegenüber dem oberen Teil des Förderbands umfasst.

11. Toilettenanlage nach Anspruch 10, **dadurch gekennzeichnet, dass** der Betrieb der Vorrichtung zum Bewegen (40) der Abfälle mit der Bewegung des Förderbands (15) synchronisiert ist.

12. Toilettenanlage nach einem der Ansprüche 1 bis 11, **dadurch gekennzeichnet, dass** sie eine Vorrichtung zum Auffangen (50) der in den Lagerungsbereich zugeführten festen Abfälle umfasst, die ein Paternosterwerk von Behältern (51) umfasst, welche vertikal beweglich sind und dazu gebracht werden, während ihrer Bewegung in dem Lagerungsbereich (31) vorübergehend anzuhalten, wobei diese Bewegung des Paternosterwerks von Behältern mit der Bewegung des Förderbands (15) synchronisiert ist.

## Claims

1. A dry toilet installation comprising:
- a toilet seat (**2**) in the form of a hollow body which, opposite a lower bearing surface (**9**) on the ground, has an upper surface (**8**) in which there is arranged a gravity evacuation opening (**3**) for liquid effluent (**4**) and solid waste (**5**);
- a conveyor belt (**15**) mounted at an angle delimiting, between a bottom part and a top part, a receiving surface (**14**) for liquid effluent and solid waste, to ensure the separating under gravity of liquid effluent and solid waste, a part of the conveyor belt (**15**), starting from its bottom part, mounted inside the toilet seat (**2**) while the conveyor belt project from the rear face of the seat through a passageway (**18**) made in said rear face of the seat;
- a device (**25**) for collecting the liquid effluent (**4**) derived from the conveyor belt (**15**)) comprising a receiving tank (**26**);
- a transfer system (**30**) ensuring the forward travel of the conveyor belt (**15**) and hence the conveying of the solid waste from a receiving area located directly below the evacuation opening towards a storage area (**31**), **characterized in that**:
- the conveyor belt (**15**) is mounted inside the toilet seat (**2**) so that directly underneath the evacuation opening (**3**) the distance between the conveyor belt (**15**) and said opening (**3**) is between 15 and 35 cm ;
- the gravity evacuation opening (**3**) is skirted by a down pipe (**23**) extending as far as the receiving surface (**14**), being positioned so that its free end (**23₁**) is not parallel to the receiving surface (**14**), the anterior part of the free end (**23₁**) of the down pipe being mounted to lie flush with the receiving surface (**14**) so as to act as stop abutment for solid waste (**5**), the posterior part of the free end (**23₁**) of the down pipe (**23**) lying away from the receiving surface (**14**) to allow the passing of solid waste (**5**), the anterior and posterior parts of the free end (**23₁**) taking into account the front and rear faces (**12**) of the seat (**2**).
- the receiving tank (**26**) of the collection device (**25**) collecting liquid effluent (**4**) is mounted inside the toilet seat (**2**) directly underneath the bottom part of the conveyor belt (**15**).

2. The toilet installation according to claim 1, **characterized in that** the gravity evacuation opening (**3**) is arranged in the upper surface (**8**) of the seat (**2**) whose front face (**11**) is of rounded shape.

3. The toilet installation according to claim 2, **characterized in that** the gravity evacuation opening (**3**) has a through cross-section of which at least part of the projection extends outside the conveyor belt (**15**) and **in that** the down pipe (**23**) has a lower end delimiting an opening whose projection extends inside the conveyor belt (**15**), the lower end (**23₁**) of the collection pipe being connected via a flared connecting wall (**23₂**) to the upper end (**23₃**) of the collecting pipe skirting the evacuation opening (**3**).

4. The toilet installation according to claim 1, **characterized in that** the toilet seat (**2**) is in the form of a chest of substantially parallelepiped shape.

5. The toilet installation according to one of claims 1 to 3, **characterized in that** the gravity evacuation opening (**3**) has an oblong through cross-section so that its projection lies inside the conveyor belt (**15**).

6. The toilet installation according to one of claims 1 to 5, **characterized in that** the down pipe (**23**) has an inner surface of dark colour and speckled appearance.

7. The toilet installation according to one of claims 1 to 6, **characterized in that** the receiving tank (**26**) for liquid effluent (**4**) comprises a trap part (**27**).

8. The toilet installation according to one of claims 1 to 7, **characterized in that** the receiving tank (**26**) has a run-off surface (**26₁**) as far as an evacuation opening (**28**), the receiving tank (**26**) being equipped with a scraper system (**60**) to scrape the run-off surface or to spray a cleaning liquid onto the run-off surface to remove solid deposits which may occur on said run-off surface.

9. The toilet installation according to one of claims 1 to 8, **characterized in that** in the storage area (**31**) it comprises a composting medium formed in particular of solid waste (**5**) brought by the conveyor belt (**15**) and of earthworms of a variety adapted to the conversion of waste into compost, and optionally a humidifying system intend to maintain the composting medium moist other than through the addition of urine.

10. The toilet installation according to one of claims 1 to 9, **characterized in that** it comprises a transfer device (**40**) transferring the solid waste which has accumulated in the storage area (**31**) directly below the top part of the conveyor belt.

11. The toilet installation according to claim 10, **characterized in that** the functioning of the transfer device (**40**) transferring waste is synchronized with the travel of the conveyor belt (**15**).

12. The toilet installation according to one of claims 1 to 11, **characterized in that** it comprises a recovery device (**50**) to collect solid waste brought into the storage area, comprising a bucket line (**51**) moving vertically, the buckets as they move being temporarily stationed in the storage area (**31**), this movement of the bucket line being synchronized with the travel of the conveyor belt (**15**).
